# EUROPÄISCHE PATENTSCHRIFT

(11) **EP 2 003 477 B1**
(45) Veröffentlichungstag und Bekanntmachung des Hinweises auf die Patenterteilung: **23.05.2012**
(21) Anmeldenummer: 07011761.9
(22) Anmeldetag: 15.06.2007
(51) Int. Cl.: G02B 6/38

(54) **Elektro-optische Hybrid-Steckverbindung zur Übertragung von hohen optischen Leistungen und elektrischen Signalen**
Electro-optical hybrid connector for transmitting high optical ratings and electrical signals
Connecteur à fiches hybride électro-optique destiné à la transmission de services optiques élevés et de signaux électriques

(43) Veröffentlichungstag der Anmeldung: 17.12.2008
(73) Patentinhaber: Trumpf Laser Marking Systems AG, 7214 Grüsch (CH)
(72) Erfinder: Anrig, Martin, CH-7320 SARGANS (CH); Büche, Dirk, CH-7215 FANAS (CH); Sauerwein, Michael, AT-6850 DORNBIRN (AT); Wildhaber, Dieter, CH-8892 BERSCHIS (CH); Zimer, Hagen, DE-07743 JENA (DE); Ziolek, Carsten, CH-7212 SEEWIS-DORF (CH)
(74) Vertreter: Kohler Schmid Möbus

(56) Entgegenhaltungen:
- WO-A1-98/19191
- WO-A1-03/005088
- DE-A1- 4 208 140
- DE-U1-202005 005 362
- GB-A- 2 346 269
- US-A- 4 279 469
- US-A- 4 707 063
- US-A- 4 896 939

## Beschreibung

Die vorliegende Erfindung betrifft eine elektro-optische Hybrid-Steckverbindung gemäß Oberbegriff von Anspruch 1.

Eine derartige elektro-optische Hybrid-Steckverbindung ist beispielsweise durch die GB-A-2 346 269 bekannt geworden.

Longitudinal dioden-endgepumpte Festkörperlaser zeichnen sich durch einen hohen Wirkungsgrad und eine gute Strahlqualität aus. Die Fähigkeit, gleichzeitig verhältnismäßig große Energiemengen speichern zu können, ermöglicht die Erzeugung von Millijoule-Pulsen mit Pulsdauern von wenigen Nanosekunden mittels resonatorinterner Güteschalter. Dies privilegiert solche Laser für die Materialbearbeitung. Insbesondere bei der Laserbeschriftung ist eine ausgezeichnete Strahlqualität des Lasers unabdingbar, um ein präzises Bearbeitungsergebnis zu erhalten. Die Erzeugung eines stigmatischen Laserstrahls aus dem Festkörperlaser erfordert einen stigmatischen Pumpstrahl. Dieser wird in vielen Fällen erzeugt, indem das stark astigmatische und asymmetrische Strahlparameterprodukt eines Diodenlaserbarrens durch eine Strahlformungsoptik symmetrisiert und schließlich durch eine sphärische Fokussierungslinse in eine Multimodefaser eingekoppelt wird. Diese Faserkopplung ermöglicht grundsätzlich die räumliche Trennung zwischen der eigentlichen Festkörperlaserstrahlquelle, d.h. dem Festkörperlaserresonator, und der Pumplichtquelle. Diese räumliche Trennung von Festkörperlaserresonator und Pumplichtquelle ist insbesondere bei der Realisierung luftgekühlter Lasersysteme essentiell, um hochkompakte Laserköpfe, in denen sich der Festkörperlaserresonator befindet, mit geringem Gewicht zu bauen. Denn die Pumplichtquelle erzeugt eine derart hohe Wärmeleistung, dass großvolumige Kühlkörper mit hohem Gewicht verwendet werden müssen. Die Auslagerung der Pumplichtquelle samt der erforderlichen Kühleinheit in ein Versorgungsgerät des Festkörperlasers ermöglicht daher einen kleinvolumigen Aufbau des eigentlichen Laserkopfes.

Die optische Verbindung zwischen dem Versorgungsgerät und dem Laserkopf ist durch die zuvor erwähnte Multimodefaser (Glasfaser) gebildet. In den meisten Fällen ist die Schnittstelle zwischen dem Versorgungsgerät und dem Laserkopf nicht allein durch die optische Pumplichtverbindung gegeben. Vielmehr werden auch elektrische Datenleitungen zur Steuerung von Aktuatoren im Laserkopf oder zur Übertragung von Sensordaten benötigt. Befindet sich am Laserkopf ein weiteres zu steuerndes Element (z.B. ein Spanner), so werden noch weitere elektrische Leitungen benötigt. Mit anderen Worten muss der Laserkopf sowohl optisch als auch elektrisch mit dem Versorgungsgerät verbunden werden. Um einen einfachen Tausch von Versorgungsgerät und Laserkopf beim Kunden vornehmen zu können, ist daher eine gemeinsame elektro-optische Hybridsteckverbindung für die mindestens eine optische Faser und die mindestens eine elektrische Leitung wünschenswert.

Elektro-optische Hybrid-Steckverbindungen werden bereits in der Avionik, im Telekommunikationsbereich, beim Militär und in der Raumfahrt eingesetzt. Bei den bisher verfügbaren Hybrid-Steckverbindungen handelt es sich bei der optischen Schnittstelle meist um eine single-mode-Faserübertragung mit verhältnismäßig kleinen optischen Leistungen von typischerweise 1-2 W und kleinen Faserkerndurchmessern von ca. 7...50 µm. Aufgrund der niedrigen Leistungen sind die bisher verwendeten Hybrid-Steckerverbindungen hinsichtlich ihrer Zerstörung durch potentielle Kopplungsverluste unkritisch. Die bei diesen Hybrid-Steckerverbindungen verwendete "Butt-Coupling"-Technologie mit gekrümmten, unbeschichteten Faserendflächen funktioniert in diesem niedrigen Leistungsbereich sehr gut, ist aber für optische Multimode-Hochleistungsverbindungen (Leistung ≥ 10 W) mit großen Faserkerndurchmessern von ca. 0.1...1.0 mm ungeeignet. Die im niedrigen Leistungsbereich von 1-2 W typischerweise auftretenden Kopplungsverluste von etwa 0.2 dB bei single-mode-Fasern bzw. Multimodefasern mit kleinen Kerndurchmessern können im optischen Hochleistungsbereich (Leistung ≥ 10 W) nicht toleriert werden.

Optische Steckverbindungen für optische Fasern bzw. Lichtwellenleiter sind hinlänglich bekannt. Ein bekannter optischer Stecker ist der so genannte F-SMA-(auch SMA-)Stecker, der international standardisiert wurde. Bei diesem F-SMA-Stecker handelt es sich um einen Schraubstecker, bei dem die Faser in einer relativ langen metallischen Ferrule mit einem Stiftdurchmesser von 3,175 mm geführt wird, die an der Kontaktfläche plan geschliffen ist. Die Einfügedämpfung, die mit diesem Stecker erzielt wird, hängt von einer Vielzahl von Kriterien ab. So liegt beispielsweise die Dämpfung bei Lichtleitern mit größerem Kerndurchmesser deutlich unter der von Fasern kleinerer Durchmesser.

Die eingangs genannte GB-A-2 346 269 offenbart eine elektro-optische Hybrid-Steckverbindung mit Faserkabeln zur Übertragung optischer Datensignale niedriger Leistungen. Die beiden Fasern sind jeweils unmittelbar im Steckergehäuse eingefasst und werden über die ineinander greifenden Steckergehäuse zueinander zentriert. Die Steckergehäuse werden soweit in einander gesteckt, bis das eine Steckergehäuse am anderen Steckergehäuse anliegt und dabei noch ein Spalt zwischen den Faserenden der beiden Fasern vorhanden ist.

Aus DE 42 08 140 A1 ist ferner eine Drehkupplung für Lichtwellenleiter bekannt, wobei die Faserenden der optisch miteinander verbundenen Lichtwellenleiter jeweils eine verrundete Fase aufweisen bzw. selbst abgerundet sind. Die Kupplung besteht aus einer Hülse und einem Stift, der durch die Faser gebildet ist. Zum Schutz der Faserenden ist in der Verbindungsstelle ein Spalt zwischen den Faserenden vorgesehen, der zur Verringerung von Reflexionen mit einer Indexflüssigkeit gefüllt ist.

Weiterhin sind aus DE 20 2005 005 362 U1 ein Kabel zur optischen Datenübertragung sowie eine entsprechende optische Steckverbindung bekannt, wobei sich an die Faserenden im Bereich der Steckverbindung Linsen anschließen. Zwischen den Linsen bleibt auch bei vollständig ineinander gesteckten Steckern der Steckverbindung ein axialer Spalt bestehen. Hierdurch wird die Übertragung axialer Kräfte auf die optischen Komponenten, die zu Beschädigungen führen könnten, vermieden. Die optischen Komponenten in Form der Linsen bündeln das von der optischen Faser kommende Licht, so dass der Spalt verlustfrei überwunden werden kann.

Schließlich sind aus US 4,896,939 noch ein Kabel und eine optische Steckverbindung zur optischen Datenübertragung bekannt, wobei die optischen Fasern an ihren Enden bündig mit einem Ferrulenende geschliffen und dann mit einer ca. 6,35 µm dünnen Chrom-Schicht versehen werden. Durch diese Chrom-Schichten sind die Faserenden einerseits geschützt und andererseits in der Steckverbindung ca. 12,7 µm voneinander beabstandet.

Die Aufgabe der vorliegenden Erfindung besteht darin, eine elektro-optische Hybrid-Steckverbindung für hohe optische Leistungen, insbesondere im Multimode-Betrieb, von größer ca. 10 W bereitzustellen.

Diese Aufgabe wird erfindungsgemäß gelöst durch eine elektro-optische Hybrid-Steckverbindung mit den Merkmalen von Anspruch 1.

Bei der erfindungsgemäßen Hybrid-Steckverbindung sind die Faserenden plan ausgeführt und mit einer Antireflexionsschicht versehen sowie zum Schutz der Antireflexionsschichten voneinander beabstandet. Durch diese Ausgestaltung können Strahlungsverluste an der optischen Schnittstelle weitestgehend minimiert werden, so dass auch bei Hochleistungsapplikationen die Zerstörschwelle der eingesetzten Komponenten nicht überschritten wird.

Vorzugsweise sind die optischen Fasern Multimodefasern und für hohe optische Leistungen von mindestens 10 W ausgelegt.

Um eine Schädigung der zumindest einen elektrischen Leitung durch austretende Strahlung aus zumindest einer der optischen Faser zu verhindern, verfügen die optischen Fasern über eine integrierte Sicherheitsvorrichtung. Diese führt bei Austritt von Strahlung aus dem Führungsbereich der Faser zur Abschaltung des Lasers. Diese Sicherheitsvorrichtung beruht bevorzugt auf einer Detektion von Widerstandsänderungen. Ergänzend verfügt das Hybridkabel über eine elektrische Leitung zur Überprüfung der ordnungsgemäßen Positionierung des Stecker der Hybrid-Steckverbindung. Sind die Kontakte dieser elektrischen Leitung nicht gesteckt, so wird ebenfalls kein Laserstrahl freigegeben.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform der erfindungsgemäßen elektro-optischen Hybrid-Steckverbindung;
- Fig. 2: eine zweite Ausführungsform der erfindungsgemäßen elektro-optischen Hybrid-Steckverbindung;
- Fig. 3: eine Ausführungsform eines erfindungsgemäßen Hybridkabels; und
- Fig. 4: schematisch den Aufbau eines Lasersystems mit einem Versorgungsgerät und einem Laserkopf, die beide miteinander optisch und elektrisch über das in Fig. 3 gezeigte Hybridkabel und die in Fig. 1 oder Fig. 2 gezeigte Hybrid-Steckverbindung verbunden sind.

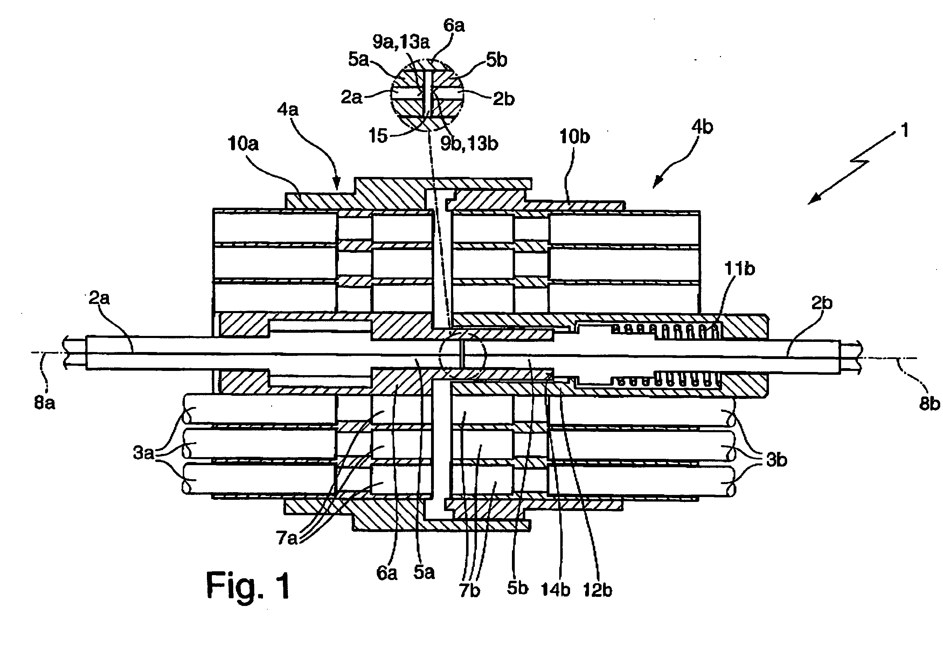

Die in **Fig. 1** gezeigte elektro-optische Hybrid-Steckverbindung 1 dient zur optischen Verbindung mindestens einer ersten und einer zweiten optischen Faser (Lichtwellenleiter) **2a, 2b** und zur elektrischen Verbindung mehrerer erster und zweiter elektrischer Leitungen **3a, 3b** mithilfe zweier ineinandersteckbarer Stecker **4a, 4b.** Die Komponenten des ersten Steckers 4a sind jeweils mit "a" und die Komponenten des zweiten Steckers 4b jeweils mit "b" gekennzeichnet. Der erste Stecker 4a weist eine Ferrule **5a,** in der die erste optische Faser 2a eingefasst ist, eine die Ferrule 5a umgebende Zentrierhülse **6a** aus Edelstahl oder Aluminium, die über die Ferrule 5a vorsteht, und mehrere an die ersten elektrischen Leitungen 3a angeschlossene elektrische Steckerkontakte **7a** auf. Der zweite Stecker 4b weist eine Ferrule **5b,** in der die zweite optische Faser 2b eingefasst ist, und mehrere an die zweiten elektrischen Leitungen 3b angeschlossene elektrische Steckerkontakte **7b** auf. Die beiden optische Fasern 2a, 2b weisen jeweils rechtwinklig zur Faserachse **8a, 8b** verlaufende plane Faserenden **9a, 9b** auf, die jeweils bündig mit den Ferrulenenden abschließen. Die optischen Fasern 2a, 2b sind vorzugsweise Multimodefasern mit Faserkemdurchmessem von mindestens ca. 0.1 mm und für hohe optische Leistungen von mindestens ca.10 W ausgelegt.

Während die Ferrule 5a fest im Steckergehäuse **10a** des ersten Steckers 4a montiert ist, ist die Ferrule 5b im Steckergehäuse **10b** des zweiten Steckers 4b axial verschiebbar geführt und durch eine Feder **11b** in Richtung auf die Steckerschnittstelle, also in Fig.**1** nach links, vorgespannt. Die Ferrule 5a ist durch die Zentrierhülse 6a nach außen abgeschirmt, und die Ferrule 5b ist von einer hier als Metallhülse **12b** ausgebildeten metallischen Abschirmung umgeben. Die planen Faserenden 9a, 9b der beiden optischen Fasern 2a, 2b sind mit einer dielektrischen Antireflexionsschicht **13a, 13b** versehen.

Bei vollständig ineinander gesteckten Steckern 4a, 4b ist, wie in Fig. 1 gezeigt, die Ferrule 5b des zweiten Steckers 4b in die Zentrierhülse 6a des ersten Steckers 4a so weit eingesteckt, bis sie mit einem hier als Ringabsatz ausgebildeten Anschlag **14b** stimseitig an der Zentrierhülse 6a anliegt und zwischen den beiden Ferrulen 5a, 5b sowie den Faserenden 9a, 9b ein vorbestimmter Luftspalt **15** von ca. 5-500 µm für typische Faserkemdurchmesser von 100-800 µm bei gleicher NA verbleibt. Dieser Luftspalt 15 verhindert den mechanischen Kontakt der Faserenden 9a, 9b und eine Beschädigung ihrer Antireflexionsschichten 13a, 13b. Durch die Feder 11 b ist die Ferrule 5b des zweiten Steckers 4b in Anlage an der Zentrierhülse 6 gehalten. Bei vollständig ineinander gesteckten Steckern 4a, 4b ist außerdem die Zentrierhülse 6a ihrerseits in die Metallhülse 12b eingesteckt und sind auch die Steckerkontakte 7a, 7b der beiden Stecker 4a, 4b elektrisch leitend ineinander gesteckt. Durch diese Hybridsteckverbindung 1 sind Strahlungsverluste an der optischen Schnittstelle weitestgehend minimiert, so dass auch bei Hochleistungsapplikationen die Zerstörschwelle der eingesetzten Komponenten nicht überschritten wird.

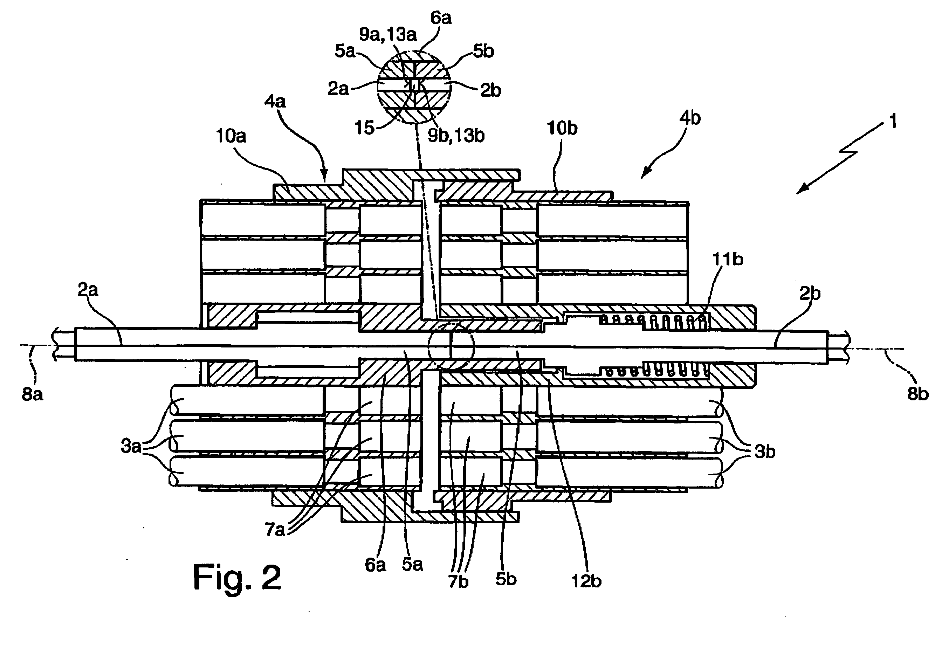

Von der Hybrid-Steckverbindung der Fig. 1 unterscheidet sich die in **Fig. 2** gezeigte elektro-optische Hybrid-Steckverbindung 1 lediglich dadurch, dass hier zumindest eine, vorzugsweise beide Ferrulen 5a, 5b über ihr jeweiliges Faserende 9a, 9b vorstehen, dass die Ferrule 5a keinen mit der Zentrierhülse 6a zusammenwirkenden Anschlag aufweist und dass bei vollständig ineinander gesteckten Steckern 4a, 4b die beiden Ferrulen 5a, 5b mit den Ferrulenenden stirnseitig aneinander anliegen. Aufgrund der Rückversetzung des zumindest einen Faserendes liegen die Faserenden 9a, 9b nicht aneinander an, sondern es verbleibt auch hier ein Luftspalt 15.

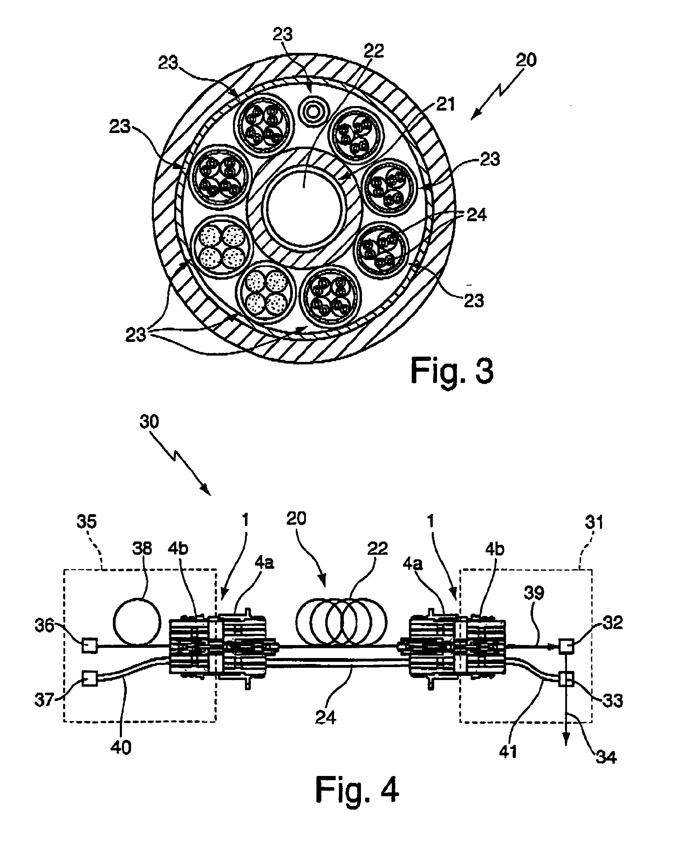

**Fig. 3** zeigt einen Querschnitt eines Hybridkabels **20,** an dem die Stecker 4a, 4b angebracht werden können. Im gezeigten Ausführungsbeispiel weist das Hybridkabel 20 ein Lichtwellenleiterkabel **21** mit einer optischen Faser **22** und integrierten Sicherheitsvorrichtungen, die bei Austritt von Strahlung aus dem Führungsbereich der Faser oder bei nicht ordnungsgemäß ausgebildeter Steckverbindung 1 eine Laserleistungsabgabe verhindert, sowie mehrere Kabel **23** mit jeweils einer oder mehreren elektrischen Leitungen (Adem) **24** auf.

**Fig. 4** zeigt schematisch den Aufbau eines Lasersystems **30** mit einem Laserkopf **31,** in dem optische Komponenten einer Laserstrahlquelle **32** und z.B, ein elektrisch angesteuerter Scanner **33** zum Ablenken eines aus dem Laserkopf **31** austretenden Laserstrahls **34** angeordnet sind, und mit einem separaten Versorgungsgerät **35,** In dem eine Pumplichtquelle **36** für die Laserstrahlquelle 32 und eine Versorgungs- und Ansteuerungselektronik **37** für den Laserkopf 31 angeordnet sind. Die Laserstrahlquelle 32 ist beispielsweise ein diodengepumpter Festkörperlaser (z.B. Nd:YAG oder Nd:YVO₄), dessen optische Komponenten, wie z.B. ein Laserresonator mit Auskoppelspiegel, Rückspiegel und dazwischen angeordnetem Laserkistall, sowie ggf. ein Güteschalter, eine Strahlfalle und eine Strahlformung, im Laserkopf 31 angeordnet sind.

Die elektrische und optische Verbindung des Laserkopfes 31 mit dem Versorgungsgerät 35 erfolgt mithilfe des Hybridkabels 20, das mit seinen endseitig vorgesehenen Steckern 4a in die am Laserkopf 31 und am Versorgungsgerät 35 vorgesehenen Stecker 4b eingesteckt ist. Die optische Hochleistungsübertragungsstrecke zwischen Laserkopf **31** und Versorgungsgerät 35 ist gebildet durch eine optische Faser **38** im Versorgungsgerät 35, die von der Pumplichtquelle 36 zum Stecker 4b des Versorgungsgeräts 35 führt, durch die optische Faser 22 (vgl. Fig. 3) im Hybridkabel 20, die die beiden Stecker 4a des Hybridkabels 20 miteinander optisch verbindet, und durch eine optische Faser **39** im Laserkopf **31,** die vom Stecker 4b des Laserkopfes 31 zur Laserstrahlquelle 32 führt. Die elektrische Verbindung zwischen Laserkopf 31 und Versorgungsgerät 35 ist gebildet durch elektrische Leitungen **40** im Versorgungsgerät 35, die von der Versorgungs- und Ansteuerungselektronik 37 zum Stecker 4b des Versorgungsgeräts 35 führen, durch die elektrischen Leitung 24 im Hybridkabel 20, die die beiden Stecker 4a des Hybridkabels 20 miteinander elektrisch verbinden, und durch elektrische Leitungen **41** im Laserkopf 31, die vom Stecker 4b des Laserkopfes 31 z.B. zum Scanner 33 führen.

## Patentansprüche

1. Elektro-optische Hybrid-Steckverbindung (1) zur optischen Verbindung mindestens einer ersten und einer zweiten optischen Faser (2a, 2b) und zur elektrischen Verbindung mindestens einer ersten und einer zweiten elektrischen Leitung (3a, 3b), umfassend:
einen ersten Stecker (4a) mit der ersten optischen Faser (2a) und mit mindestens einem an die erste elektrische Leitung (3a) angeschlossenen elektrischen Steckerkontakt (7a),
- einen zweiten Stecker (4b) mit der zweiten optischen Faser (2b) und mit mindestens einem an die zweite elektrische Leitung (3b) angeschlossenen elektrischen Steckerkontakt (7b),
wobei jede der beiden optischen Fasern (2a, 2b) ein rechtwinklig zur Faserachse (8a, 8b) verlaufendes planes Faserende (9a, 9b) aufweist, und
wobei im zusammengesteckten Zustand der beiden Stecker (4a, 4b) die Steckerkontakte (7a, 7b) der beiden Stecker (4a, 4b) elektrisch leitend ineinander gesteckt sind und die Faserenden (9a, 9b) der beiden optischen Fasern (2a, 2b) durch einen Luftspalt (15) voneinander beabstandet sind,
**dadurch gekennzeichnet,**
**dass** die optischen Fasern (2a, 2b) zur Übertragung von hohen optischen Leistungen von mindestens 10 Watt ausgelegt sind,
**dass** die erste optische Faser (2a) in einer Ferrule (5a) eingefasst ist, die im ersten Stecker (4a) angeordnet und von einer über die Ferrule (5a) vorstehenden Zentrierhülse (6a) umgeben ist,
**dass** die zweite optische Faser (2b) in einer Ferrule (5b) eingefasst ist, die im zweiten Stecker (4b) angeordnet ist,
**dass** das plane Faserende (9a, 9b) jeder der beiden optischen Fasern (2a, 2b) mit einer Antireflexionsschicht (13a, 13b) versehen ist, und
**dass** im zusammengesteckten Zustand der beiden Stecker (4a, 4b) die Ferrule (5b) des zweiten Steckers (4b) in die Zentrierhülse (6a) des ersten Steckers (4a) bis zur Anlage an der Zentrierhülse (6a) oder an der Ferrule (5a) des ersten Steckers (4a) eingesteckt ist.

2. Hybrid-Steckverbindung nach Anspruch 1, **dadurch gekennzeichnet, dass** zumindest eine, insbesondere jede der beiden Ferrulen (5a, 5b) bündig mit dem Faserende (9a, 9b) der jeweils eingefassten Faser (2a, 2b) abschließt.

3. Hybrid-Steckverbindung nach Anspruch 1 oder 2, **dadurch gekennzeichnet, dass** zumindest eine, insbesondere jede der beiden Ferrulen (5a, 5b) über das Faserende (9a, 9b) der jeweils eingefassten Faser (2a, 2b) vorsteht.

4. Hybrid-Steckverbindung nach einem der vorhergehenden Ansprüche, **dadurch gekennzeichnet, dass** die Ferrule (5b) des zweiten Steckers (2b) einen Anschlag (14b) aufweist, mit dem sie im zusammengesteckten Zustand der beiden Stecker (4a, 4b) an der Zentrierhülse (6a) des ersten Steckers (2a) anliegt.

5. Hybrid-Steckverbindung nach einem der Ansprüche 1 bis 3, **dadurch gekennzeichnet, dass** zumindest eine, insbesondere jede der beiden Ferrulen (5a, 5b) über das Faserende (9a, 9b) der jeweils eingefassten Faser (2a, 2b) vorsteht und dass im zusammengesteckten Zustand der beiden Stecker (4a, 4b) die beiden Ferrulen (5a, 5b) mit ihren vorstehenden Ferrulenenden stirnseitig aneinander anliegen.

6. Hybrid-Steckverbindung nach einem der vorhergehenden Ansprüche, **dadurch gekennzeichnet, dass** die Ferrule (5a, 5b) oder die Hülse (6a, 12b) mindestens eines der beiden Stecker (4a, 4b) gegen die Wirkung einer Feder (11a) axial verschiebbar geführt ist.

7. Hybrid-Steckverbindung nach einem der vorhergehenden Ansprüche, **dadurch gekennzeichnet, dass** jeder der beiden Stecker (4a, 4b) eine die Ferrule (5a, 5b) umgebende metallische Abschirmung, insbesondere eine Metallhülse (6a, 12b), aufweist.

8. Hybrid-Steckverbindung nach einem der vorhergehenden Ansprüche, **dadurch gekennzeichnet, dass** die Hülse (6a, 12b) aus Metall, insbesondere aus Edelstahl oder Messing ist.

9. Hybrid-Steckverbindung nach einem der vorhergehenden Ansprüche, **dadurch gekennzeichnet, dass** die optischen Fasern (2a, 2b) Multimodefasern sind.

10. Hybrid-Steckverbindung nach einem der vorhergehenden Ansprüche, **dadurch gekennzeichnet, dass** die optischen Fasern (2a, 2b) für hohe optische Leistungen von mindestens 10 W ausgelegt sind.

11. Hybrid-Steckverbindung nach einem der vorhergehenden Ansprüche, **dadurch gekennzeichnet, dass** mindestens einer der beiden Stecker (4a, 4b) an einem Hybridkabel (20) vorgesehen ist, das mindestens eine optische Faser (22) und mindestens eine elektrische Leitung (24) aufweist.

## Claims

1. Electro-optical hybrid plug connector (1) for the optical connection of at least a first and a second optical fibre (2a, 2b) and for the electrical connection of at least a first and a second electrical conductor (3a, 3b), comprising: .
- a first plug (4a) having the first optical fibre (2a) and having at least one electric plug contact (7a) connected to the first electrical conductor (3a),
- a second plug (4b) having the second optical fibre (2b) and having at least one electric plug contact (7b) connected to the second electrical conductor (3b),
each of the two optical fibres having a planar fibre end (9a, 9b) running at right angles to the fibre axis (8a, 8b) and, when the two plugs (4a, 4b) are plugged together, the plug contacts (7a, 7b) of the two plugs (4a, 4b) being plugged into one another in an electrically conductive manner, and the fibre ends (9a, 9b) of the two optical fibres (2a, 2b) being spaced apart from one another by an air gap (15),
**characterized**
**in that** the optical fibres (2a, 2b) are designed to transmit high optical ratings of at least 10 W,
**in that** the first optical fibre (2a) is enclosed in a ferrule (5a), which is arranged in the second plug (4b), and is surrounded by a centring sleeve (6a) projecting beyond the ferrule (5a),
**in that** the second optical fibre (2b) is enclosed in a ferrule (5b) which is arranged in the second plug (4b),
**in that** the planar fibre end (9a, 9b) of each of the two optical fibres (2a, 2b) is provided with an anti-reflective layer (13a, 13b), and
**in that**, when the two plugs (4a, 4b) are plugged together, the ferrule (5b) of the second plug (4b) is plugged into the centring sleeve (6a) of the first plug (4a) until it is in contact with the centring sleeve (6a) or with the ferrule (5a) of the first plug (4a).

2. Hybrid plug connector according to Claim 1, **characterized in that** at least one ferrule, in particular each of the two ferrules (5a, 5b), terminates flush with the fibre end (9a, 9b) of the fibre (2a, 2b) that is respectively enclosed.

3. Hybrid plug connector according to Claim 1 or 2, **characterized in that** at least one ferrule, in particular each of the two ferrules (5a, 5b), projects beyond the fibre end (9a, 9b) of the fibre (2a, 2b) that is respectively enclosed.

4. Hybrid plug connector according to one of the preceding claims, **characterized in that** the ferrule (5b) of the second plug (2b) has a stop (14b) with which, when the two plugs (4a, 4b) are plugged together, it rests on the centring sleeve (6a) of the first plug (2a).

5. Hybrid plug connector according to one of Claims 1 to 3, **characterized in that** at least one ferrule, in particular each of the two ferrules (5a, 5b), projects beyond the fibre end (9a, 9b) of the fibre (2a, 2b) that is respectively enclosed, and **in that**, when the two plugs (4a, 4b) are plugged together, the two ferrules (5a, 5b) rest on each other at the end with their projecting ferrule ends.

6. Hybrid plug connector according to one of the preceding claims, **characterized in that** the ferrule (5a, 5b) or the sleeve (6a, 12b) of at least one of the two plugs (4a, 4b) is guided such that it can be displaced axially counter to the action of a spring (11 a).

7. Hybrid plug connector according to one of the preceding claims, **characterized in that** each of the two plugs (4a, 4b) has a metallic screen surrounding the ferrule (5a, 5b), in particular a metal sleeve (6a, 12b).

8. Hybrid plug connector according to one of the preceding claims, **characterized in that** the sleeve (6a, 12b) is made of metal, in particular of stainless steel or brass.

9. Hybrid plug connector according to one of the preceding claims, **characterized in that** the optical fibres (2a, 2b) are multimode fibres.

10. Hybrid plug connector according to one of the preceding claims, **characterized in that** the optical fibres (2a, 2b) are designed for high optical ratings of at least 10 W.

11. Hybrid plug connector according to one of the preceding claims, **characterized in that** at least one of the two plugs (4a, 4b) is provided on a hybrid cable (20) which has at least one optical fibre (23) and at least one electric conductor (24).

## Revendications

1. Connexion enfichable hybride électro-optique (1) pour la liaison optique d'au moins une première et une deuxième fibre optique (2a, 2b) et pour la liaison électrique d'au moins une première et une deuxième ligne électrique (3a, 3b), comprenant :
- un premier connecteur (4a) avec la première fibre optique (2a) et avec au moins un contact électrique de connecteur (7a) raccordé à la première ligne électrique (3a),
- un deuxième connecteur (4b) avec la deuxième fibre optique (2b) et avec au moins un contact électrique de connecteur (7b) raccordé à la deuxième ligne électrique (3b),
chacune des deux fibres optiques (2a, 2b) présentant une extrémité de fibre plane (9a, 9b) s'étendant à angle droit par rapport à l'axe de fibre (8a, 8b), et, dans l'état accouplé des deux connecteurs (4a, 4b), les contacts de connecteur (7a, 7b) des deux connecteurs (4a, 4b) étant enfichés l'un dans l'autre de manière électroconductrice et les extrémités de fibre (9a, 9b) des deux fibres optiques (2a, 2b) étant espacées l'une de l'autre par une lame d'air (15),
**caractérisée en ce**
**que** les fibres optiques (2a, 2b) sont conçues pour transmettre des puissances optiques élevées d'au moins 10 watts,
**que** la première fibre optique (2a) est insérée dans une ferrule (5a) qui est disposée dans le premier connecteur (4a) et entourée par une douille de centrage (6a) qui s'avance au-delà de la ferrule (5a),
**que** la deuxième fibre optique (2b) est insérée dans une ferrule (5b) qui est disposée dans le deuxième connecteur (4b),
**que** l'extrémité de fibre plane (9a, 9b) de chacune des deux fibres optiques (2a, 2b) est pourvue d'une couche antiréfléchissante (13a, 13b), et
**que** dans l'état accouplé des deux connecteurs (4a, 4b), la ferrule (5b) du deuxième connecteur (4b) est enfichée dans la douille de centrage (6a) du premier connecteur (4a) jusqu'à l'appui sur la douille de centrage (6a) ou sur la ferrule (5a) du premier connecteur (4a).

2. Connexion enfichable hybride selon la revendication 1, **caractérisée en ce qu'**au moins une, en particulier chacune des deux ferrules (5a, 5b) se termine en affleurement avec l'extrémité de fibre (9a, 9b) de la fibre (2a, 2b) respectivement insérée.

3. Connexion enfichable hybride selon la revendication 1 ou 2, **caractérisée en ce qu'**au moins une, en particulier chacune des deux ferrules (5a, 5b) s'avance au-delà de l'extrémité de fibre (9a, 9b) de la fibre (2a, 2b) respectivement insérée.

4. Connexion enfichable hybride selon une des revendications précédentes, **caractérisée en ce que** la ferrule (5b) du deuxième connecteur (2b) présente une butée (14b) par laquelle elle est en appui sur la douille de centrage (6a) du premier connecteur (2a) dans l'état accouplé des deux connecteurs (4a, 4b).

5. Connexion enfichable hybride selon une des revendications 1 à 3, **caractérisée en ce qu'**au moins une, en particulier chacune des deux ferrules (5a, 5b) s'avance au-delà de l'extrémité de fibre (9a, 9b) de la fibre (2a, 2b) respectivement inséré et que dans l'état accouplé des deux connecteurs (4a, 4b), les deux ferrules (5a, 5b) sont en appui l'une sur l'autre frontalement par leurs extrémités de ferrule avancées.

6. Connexion enfichable hybride selon une des revendications précédentes, **caractérisée en ce que** la ferrule (5a, 5b) ou la douille (6a, 12b) d'au moins un des deux connecteurs (4a, 4b) est guidée de manière coulissante axialement contre l'action d'un ressort (11a).

7. Connexion enfichable hybride selon une des revendications précédentes, **caractérisée en ce que** chacun des deux connecteurs (4a, 4b) présente un blindage métallique, en particulier une douille métallique (6a, 12b), qui entoure la ferrule (5a, 5b).

8. Connexion enfichable hybride selon une des revendications précédentes, **caractérisée en ce que** la douille (6a, 12b) est en métal, en particulier en acier inoxydable ou en laiton.

9. Connexion enfichable hybride selon une des revendications précédentes, **caractérisée en ce que** les fibres optiques (2a, 2b) sont des fibres multimodes.

10. Connexion enfichable hybride selon une des revendications précédentes, **caractérisée en ce que** les fibres optiques (2a, 2b) sont conçues pour des puissances optiques élevées d'au moins 10 W.

11. Connexion enfichable hybride selon une des revendications précédentes, **caractérisée en ce qu'**au moins un des deux connecteurs (4a, 4b) est prévu sur un câble hybride (20) qui présente au moins une fibre optique (22) et au moins une ligne électrique (24).
